# EUROPEAN PATENT SPECIFICATION

(11) **EP 2 342 783 B1**
(45) Date of publication and mention of the grant of the patent: **26.09.2012**
(21) Application number: 09749040.3
(22) Date of filing: 21.10.2009
(51) Int. Cl.: H01R 13/703, H01R 27/00, H02G 3/14, H01R 29/00, H01R 13/447, H01R 13/70

(54) **MULTI-CAPACITY POWER SUPPLY FOR ELECTRONIC DEVICES**
MEHRFACHKAPAZITÄTS-STROMVERSORGUNG FÜR ELEKTRONIKGERÄTE
ALIMENTATION ÉLECTRIQUE À CAPACITÉ MULTIPLE POUR DISPOSITIFS ÉLECTRONIQUES

(30) Priority: 07.11.2008 US 266956
(43) Date of publication of application: 13.07.2011
(73) Proprietor: International Business Machines Corporation, Armonk, NY 10504 (US)
(72) Inventor: LANGGOOD, John, North Carolina 27709-2195 (US); LEWIS, Thomas, North Carolina 297709-2195 (US); REINBERG, Kevin, North Carolina 27709-2195 (US); VERNON, Kevin, North Carolina 27709-2195 (US)
(74) Representative: Robertson, Tracey
(86) International application number: PCT/EP2009/063822
(87) International publication number: WO 2010/052128

(56) References cited:
- GB-A- 2 296 390
- US-A- 5 967 807
- US-B1- 6 283 775

## Description

### BACKGROUND OF THE INVENTION

### Field of the Invention

The present invention relates to powering an electronic device, and more particularly to connecting the electronic device to a power outlet.

### Background of the Invention

Electronic devices such as computer equipment are powered by connection to a source of alternating current (AC), such as an AC power outlet. This connection is typically made using a detachable power cord. The power cord has a female connector or "line socket" at one end that connects to a corresponding male connector on the back of the computer equipment, and a male connector or "plug" at the other end that connects to a power outlet. Generally, a female electrical connector may be referred to as a "socket," and a male electrical connector may be referred to as a "plug," which has an arrangement of prongs that are received by a corresponding arrangement of prong receptacles on the socket.

Electrical connectors are available in an array of types, which are generally established by standards bodies such as the International Electrotechnical Commission (IEC) and the National Electrical Manufacturers Association (NEMA). Connector types may be distinguished by physical size and shape (i.e. "form factor"), the number and arrangement of prongs (male) or corresponding prong receptacles (female), and by an electrical current rating. For example, personal computers and monitors typically use a ten-ampere C 13 (female) and matching C14 (male) connector type specified by the IEC 60320 standard. Other computer equipment, such as some servers and UPS systems, use C19/C20 connectors also set forth by the IEC 60320 standard. As compared with the C13/C14 connectors, the C19/C20 connectors have a different form factor, different prong/receptacle arrangement, and a higher, sixteen-ampere current rating.

Additionally, most countries set their own standards for AC power outlets. Worldwide, most AC power outlets fall under one of two predominant voltage and frequency standards: the North American standard of 100-120V at 60 Hz (referred to commonly as "low line") and the European standard of 220-240V at 50 Hz (referred to commonly as "high line"). AC power outlets further vary by prong receptacle arrangement. To make an electronic device compatible with the many different AC power outlets available worldwide having different combinations of voltage, frequency and receptacle arrangements, manufacturers commonly provide a single, world-standard IEC connector on an electronic device, and a multitude of country-specific power cords. Each country-specific power cord includes a standard IEC connector on one end corresponding to the standard connector on the device and a national power plug at the other end corresponding to the type of wall socket available in the country where the device is intended to be sold or used.

This approach of manufacturing electronic devices with a standard IEC connector and providing different, country-specific cords allows the devices to be used with a variety of AC power outlets throughout the world. However, compatibility issues may still arise in some circumstances. For example, a universal power supply may work on both 110 and 220 volts. In the United States, the power coupler on the back of the power supply is typically 15 amps for 110 volts. The line cord matches the 15 amp power coupler to a 15 amp power plug. The 15 amp power plug plugs into a 15 amp wall outlet. In Australia, however, the wall outlets are typically 10 amps and 220 volts. In that scenario, a 15 amp power coupler is on the power supply and the wall outlet is 10 amps. A power cord could be made to work under such conditions, but the regulating agencies would likely disapprove the power cord under these conditions, because such a cord would allow a 15 amp device to be connected to a 10 amp wall outlet.

US 5,967,807 discloses an improved AC/DC electric adapter with large and small plugs. The main body of the device comprises an upper and lower casing. Inside the body there is an electronic converting circuit. In the upper casing there is an indentation design to hold the large plug. In the large plug there is a small plug with rotary pins. The small plug pins can be rotated into an ordinary formation or tow angled formations. Therefore, the small plugs pins can be used to draw current from the regular socket or angled pin socket.

### DISCLOSURE OF THE INVENTION

One embodiment of the present invention provides a power supply for an electronic device. according to claim 1.

Another embodiment of the invention provides a method according to claim 10.

### BRIEF DESCRIPTION OF THE DRAWINGS

FIG. **1** is a schematic diagram of an electronic device having a power supply configured, according to an embodiment of the invention, to power the device using any of a variety of power outlets.
FIG. **2** is a schematic elevation view of the two power connectors and the movable cover of FIG. **1****.**
FIG. **3** is a schematic diagram of an electronic device having a power supply configured, according to another embodiment of the invention, to power the device by connection to any of a variety of power outlets.
FIG. **4A** is a schematic diagram showing the connector module releasably positioned in the module bay in the first rotational position.
FIG. **4B** is a schematic diagram showing the connector module releasably positioned in the module bay in a second rotational position, rotated 180 degrees from the rotational position of FIG. **4A****.**
FIG. **5** is a flowchart outlining a method of powering an electronic device according to an embodiment of the invention.

### DETAILED DESCRIPTION OF THE INVENTION

The present invention is directed, in part, to providing an electronic device with a single power supply having multiple power connectors from which to choose (e.g. both a 15-amp connector and a 10-amp connectors), to allow better matching between the electrical demands of the power supply and the multitude of different power outlets available worldwide. The invention may be embodied, for example, as a power supply for an electronic device having a plurality of power connectors supported on a chassis. A movable chassis member supported on the chassis may be movable between a plurality of distinct positions relative to the chassis to selectively expose only one of the plurality of power connectors in each position, such that only the exposed power connector may be physically connected with a power cord that is compatible with the exposed power connector. For each power connector, a manufacturer may provide a multitude of different power cords compatible with that power connector. For example, each location-specific power cord may be intended for use in a particular geographical region where a particular standard is used for AC power outlets. Power may be provided to the device at a particular geographical location by selecting a power cord having a connector at one end that matches the exposed power connector, and a plug at the other end that is specific to the type of AC power outlet available at that geographical location. A power supply controller may automatically invoke predefined power settings appropriate for the exposed power connector, and consume electrical power from the AC power outlet according to the predefined power settings. The power supply may convert the alternating current to direct current and supply the direct current to power one or more electronic components. By providing a single power supply with more than one type of power connector, the most appropriate power connector may be selected according to the location in consideration of the load drawn by the electronic device.

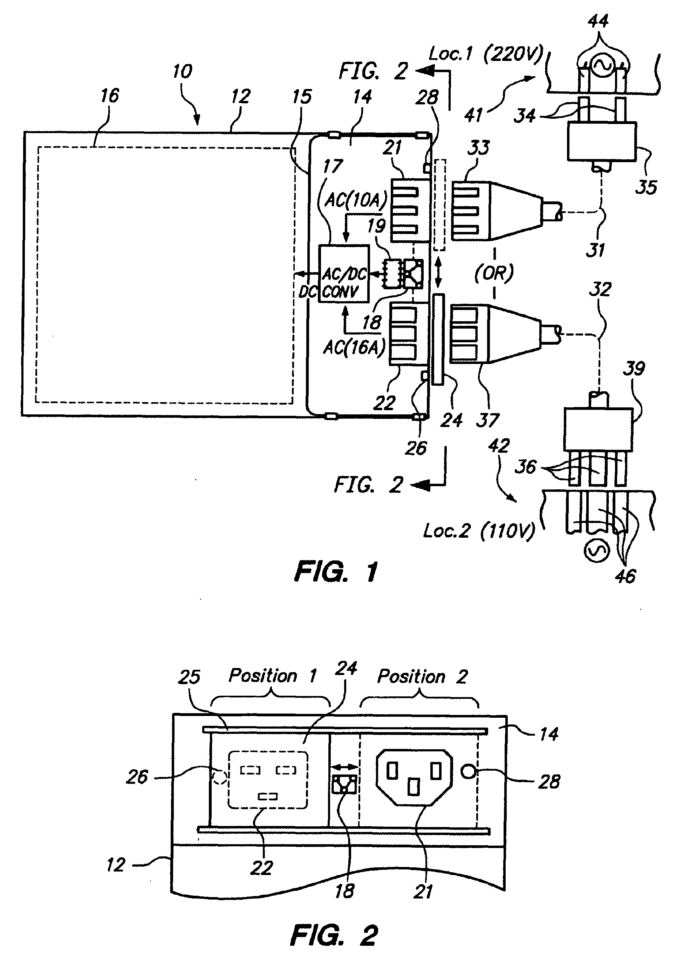

FIG. **1** is a schematic diagram of an electronic device **10** having a power supply **14** configured, according to an embodiment of the invention, to power the device **10** using any of a variety of power outlets. The device **10** has a device chassis **12** housing various electronic components, including the power supply **14** and an electronic subsystem **16** to be powered by the power supply **14.** The power supply **14** has a power supply chassis **15,** which may be (but is not required to be) integral with the device chassis **12.** The electronic subsystem **16** includes any of a variety of device components to be powered by the power supply **14.** For example, the device **10** may be a computer system and the electronic subsystem **16** may include electronic computer components such as memory and processors on a motherboard, a cooling fan, a hard drive, an optical drive, indicator lights such as LEDs, and so forth. The power supply **14** includes or is otherwise in electrical communication with at least two alternative electrical connectors **21, 22** of different types, either of which may receive a power cord for plugging the device **10** into a power outlet, as further described below. The electrical connectors **21, 22** are referred to hereinafter as "power connectors" because they are intended to receive electrical power from a power cord connected to an AC power outlet, for providing AC electrical power to the power supply **14.** While only two power connectors **21, 22** are shown, one skilled in the art will appreciate that the teachings of this disclosure can be extended to embodiments with more than two power connectors. The power connectors may be constructed as any of a variety of electrical connector types, such as one of the standard connector types set forth by the IEC. For the purpose of discussion, the first power connector **21** is assumed to be an IEC C14 male connector having a ten-ampere rating and the second power connector **22** is assumed to be an IEC C20 male connector having a sixteen-ampere rating.

The device **10** may receive power by virtue of connecting either one of the power connectors **21, 22** to any of a variety of AC power outlets available worldwide using an appropriate power cord having a line socket at one end for connecting to one of the power connectors **21, 22** and a location-specific power plug at the other end for connecting to an AC power outlet. Of the many different power outlets available worldwide, a first power outlet **41** is shown by way of example at a first location ("Loc. 1") and a second power outlet **42** is shown at a second location ("Loc. 2"). The standard for each power outlet **41, 42** may be defined, for instance, in terms of the voltage and frequency of the electrical current provided to the electrical outlets **41, 42,** the number, size, and arrangement of prong receptacles **44, 46** on the respective power outlets **41, 42,** and the amperage rating for each electrical outlet **41, 42.**

While many different standards exist for AC wall outlets, the following discussion assumes, by way of example, that the first power outlet **41** is a high-line outlet having two prong receptacles **44** and operating at 10 amperes and 220V at 50Hz, and that the second power outlet **42** is a low-line outlet having three prong receptacles **46** and operating at 15 amperes and 110V at 60Hz.

A virtually unlimited number of different, location-specific power cords may be provided for use with each power connector **21, 22.** By way of example, one power cord **31** is shown for optionally connecting the first power connector **21** to the first power outlet **41,** and one power cord **32** is shown for alternatively connecting the second power connector **22** to the second power outlet **42.** The first power cord **31** includes a ten-ampere C13 line socket **33** at one end for connecting to the corresponding type-C14 first power connector **21.** At the other end, the first power cord **31** has a power plug **35** with an arrangement of prongs **34** corresponding to the arrangement of prong receptacles **44** on the first power outlet **41,** for connecting the power plug **35** to the first power outlet **44.** Similarly, the second power cord **32** includes a C19 line socket **37** at one end for connecting to the corresponding C20 second power connector **22** on the device **10.** At the other end, the second power cord **32** has a power plug **39** with an arrangement of prongs **36** corresponding to the arrangement of prong receptacles **46** on the second power outlet **42,** for connecting the power plug **39** with the second power outlet **42.**

While each power connector **21, 22,** alone, may be used in combination with any of a multitude of location-specific power cords for powering the device **10** in as many different locations, the inclusion of the two different power connectors **21, 22** increases compatibility of the device **10** among different electrical distribution systems, by allowing the device **10** to be powered under a wider variety of electrical loading scenarios. For example, in a particular location and/or for a particular electrical loading, the higher, sixteen-ampere current rating of the C 19/C20 connector type may make the power connector **22** and power cord **32** more suitable for powering the device **10.**

A movable chassis member is supported on the device chassis **12** and/or power supply chassis **15** to provide mutually exclusive exposure of the power connectors **21, 22,** so that only one of the two power connectors **21, 22** may be used at a time to connect the device **10** to a power outlet. Multiple embodiments of the movable chassis member are within the scope of the invention. In the embodiment of FIG. **1****,** the movable chassis member comprises a cover **24** movably supported on the power supply chassis **15.** The position of the cover **24** determines which of the two power connectors **21, 22** may be used, by selectively exposing one of the power connectors **21, 22** and simultaneously blocking the other of the power connectors **21, 22.** The cover **24** is shown in a first position, which exposes the first power connector 21 for connecting with the line socket **33** of the first power cord **31** and covers the second power connector **22** to physically block the second power connector from receiving the line socket **37** of the second power cord **32.** The cover **24** may be alternately moved to a second position (shown in phantom line type), which instead exposes the second power connector **22** for connecting with the line socket **37** of the second power cord **32** and blocks the first power connector **21** from connecting to the line socket **33** of the first power cord **31.**

A different selection of power settings may be predefined for use with each power connector **21, 22** according to connector type. For example, the power settings selected for use with the first connector **21** may include a current limit of ten amperes appropriate for the C 13/C 14 connector type. Likewise, the power settings selected for use with the second power connector **22** may include a current limit of sixteen amperes appropriate for the C19/C20 connector type. Any unique combination of power settings may be associated with each different connector type, which will typically be expressed in terms of a particular combination of voltage, frequency, and current/amperage. These power settings may be enforced, in part, by a power supply controller **19** configured to invoke the power settings corresponding to the exposed power connector **21** or **22.** A switch **18** included with or otherwise in communication with the power supply controller **19** is responsive to the position of the cover **24** to indicate which of the two power connectors **21, 22** is exposed. The switch **18** may be a mechanical type switch or an electronic switching device. For example, the cover **24** may be electrically and/or mechanically coupled with the switch **18** so that the position of the cover **24** determines the state of the switch **18.** The state of the switch **18,** in turn, may signal the PS controller **19** to invoke the predefined power settings to be applied to the exposed power connector. The switch **18** may also be used to selectively enable the exposed power connector and disable AC to the blocked power connector.

Optionally, one or more position sensors may be included in addition to or in lieu of the switch **18.** For example, position sensors **26, 28** may be included to sense the position of the movable cover **24** and generate a signal to the PS controller **19** in response to invoke power settings selected for the exposed power connector **21** or **22.** Thus, the optional first position sensor **26** may be configured as a switch that senses when the cover **24** is in the first position and generates a signal to the PS controller **19** in response, to invoke the defined power settings for the first power connector **21.** Likewise, the optional second position sensor **28** may be configured as a switch that senses when the cover **24** is in the second position and generates a signal to the PS controller **19** in response to invoke the defined power settings for the second power connector **22.** The position sensors **26, 28** may include, for example, proximity sensors that sense proximity of the cover **24** without physically contacting the cover **24.** Alternatively, the position sensors **26, 28** may be electromechanical switches that are physically engaged by the cover **24** depending on its position.

In yet another option, it may be possible to replace the switch with first and second current sensors that detect current flowing through the first and second power connectors **21, 22,** respectively, and provide a signal to the controller **19** indicating which power connector is being used. Still, the cover **24** will serve to prevent simultaneous use of both power connectors.

FIG. **2** is a schematic elevation view of the two power connectors **21, 22** and the movable cover **24.** The cover **24** is movably secured to a track **25** that constrains the cover **25** to move linearly between the first and second positions. The cover **24** is not merely a removable cover, and therefore cannot be removed and repositioned to cover either of the two power connectors **21, 22,** because the ability to remove the cover **24** would undesirably expose both power connectors **21, 22** simultaneously. While it may be possible to remove the cover **24** by a technician for servicing, such as to repair or replace a broken cover, the cover **24** remains secured to the track **25** during normal use to prevent more than one of the power connector **21, 22** from receiving a power cord. The cover **24** is normally manually slid along the track **25** by a user between the first and second positions, which selectively exposes one or the other (but not both) of the two power connectors **21, 22** for connection with an appropriate power cord. In this embodiment, the cover **24** completely covers the second power connector **22** when in the first position and completely covers the first power connector **21** when in the second position. However, the connection of a power cord to a power connector can be prevented without completely covering that power connector, and the shape of the cover **24** or extent to which the cover **24** covers a power connector may therefore vary between embodiments.

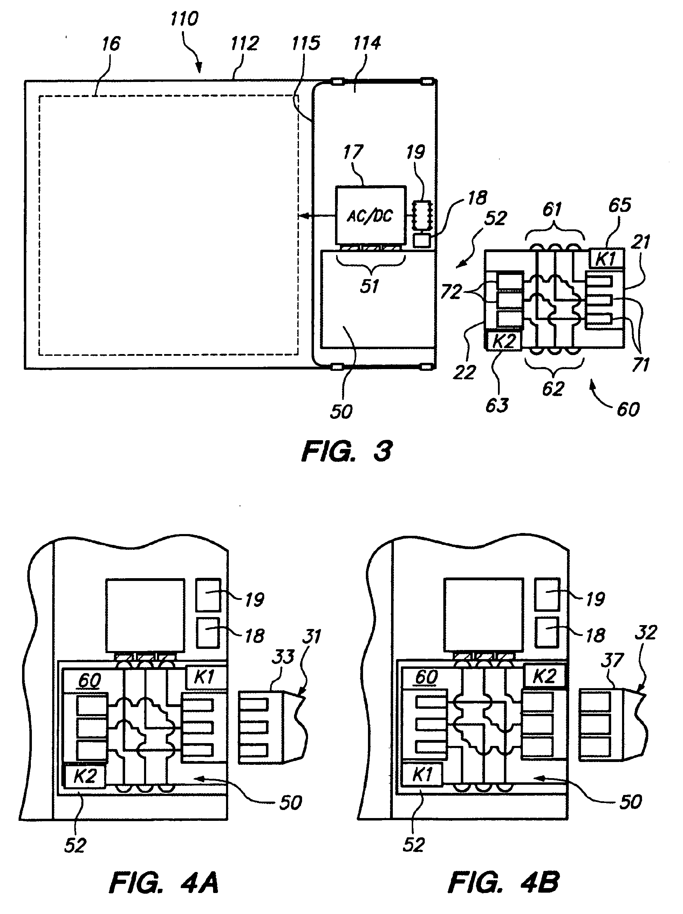

FIG. **3** is a schematic diagram of an electronic device **110** having a power supply **114** configured, according to another embodiment of the invention, to power the device **110** by connection to any of a variety of power outlets. The device **110** may be, for example, a computer system having a device chassis **112.** The device chassis **112** may be similar in appearance to the device chassis **12** in FIG. **1****,** but with the alternative power supply **114** for powering the electronic subsystem **16.** The power supply **114** has a power supply chassis **115,** which may be (but is not required to be) integral with the device chassis **112.** The device chassis **112** includes a connector module bay **50** and a removable connector module **60** on which the two power connectors **21, 22** are carried. The two power connectors **21, 22** are still assumed, by way of example, to be C14 and C20 connectors, respectively. The connector module **60** may be interchangeably inserted in the module bay **50** in either of a first rotational position (see FIG. **4A**) and a second rotational position (see FIG. **4B****)** distinct from the first rotational position. In particular, the second rotational position is 180 degrees opposite the first rotational position. A set of electrical contacts **51** are disposed within the power supply **114** adjacent to the connector module bay **50.** The electrical contacts **51** are in communication with the AC-to-DC ("AC/DC") converter circuitry **17** of the power supply **114.** The three prongs **71** on the first power connector **21** are wired to a corresponding first set of three electrical contacts **61** on the connector module **60.** The three prongs **72** on the second power connector **22** are wired to a corresponding second set of three electrical contacts **62** on an opposing side of the connector module **60.**

The switch **18** in this embodiment triggers the invocation of predefined power settings by the PS controller **19** in direct response to the rotational position of the connector module **60.** Each of the two rotational positions of the connector module **60** causes a different switch state, and each state of the switch invokes a particular set of predefined power settings selected for the exposed power connector **21** or **22.** The switch **18** may be embodied as or otherwise include a "key reader." A first key **63** ("K1") provided on the connector module **60** is uniquely associated with the first power connector **21.** A second key **65** ("K2") provided in another location on the connector module **60** is uniquely associated with the second power connector **22.** The switch **18** is configured to distinguish between the keys K1, K2 when in proximity to one of the keys K1, K2. For example, the keys K1, K2 may each include a distinct electronic, digital, magnetic, or optical signature, and the switch **18** may include an electronic, digital, magnetic, or optical reader configured for distinguishing between the two keys K1 and K2 based on the electronic, digital, magnetic, or optical signature.

Alternatively, the keys K1, K2 may be physical or mechanical keys having detectably-distinct configurations, such as a distinct size, shape, or position relative to the switch **18** when in readable proximity to the switch. Depending on the rotational position of the connector module **60,** either K1 or K2 will be in readable proximity to the switch **18.** In the rotational position of FIG. **4A****,** K1 will be in proximity to the switch **18.** In the rotational position of FIG. **4B****,** K2 will instead be in proximity to the switch **18.** Thus, the identity of the key being read implicitly indicates which of the two power connectors **21, 22** are exposed. The switch **18** "reads" the key by discerning which of the two keys K1 or K2 are in readable proximity to the switch **18.** Thus, if the keys K1 and K2 have a discernable difference in size or shape, or if each key K1 and K2 has a discernable difference in position when in readable proximity to the switch **18,** the switch **18** may thereby invoke a switch state according to the shape, size, or position of the key K1 or K2 currently in readable proximity to the switch **18.** The PS controller **19** interprets the switch state to select the predefined power settings selected for the exposed power connector **21** or **22** accordingly.

FIG. **4A** is a schematic diagram showing the connector module **60** as releasably positioned in the module bay **50** in the first rotational position. This rotational position exposes the first power connector **21** at an entrance **54** of the module bay **50** for detachably connecting with the C13 line socket **33** of the power cord **31,** while concealing the second power connector **22.** The first set of electrical contacts **61** on the connector module **60** contact the electrical contacts **51** in the module bay **50** to electrically connect the exposed first power connector **21** to the power supply **114,** so that the power supply **114** can receive electrical power from the power cord **31.** The rotational position of the connector module **60** in FIG. **4A** also positions the key K1 in proximity to the switch **18.** In response to detection of the key K1 by the switch **18,** the PS controller **19** invokes the predefined power settings selected for the first power connector **21.**

FIG. **4B** is a schematic diagram showing the connector module **60** as releasably positioned in the module bay **50** in the second rotational position, rotated 180 degrees from the rotational position of FIG. **4A****.** This second rotational position exposes the second power connector **22** at the entrance **54** of the module bay **50** for detachably connecting with the C19 line socket **37** of the power cord **32,** while concealing the first power connector **21.** The second set of electrical contacts **62** contact the electrical contacts **51** in the module bay **50** to electrically connect the exposed second power connector **22** to the power supply **114,** so that the power supply **114** can receive electrical power from the power cord **32.** The rotational position of the connector module **60** in FIG. **4B** also positions the key K2 in proximity to the switch **18.** In response to detection of the key K2 by the switch **18,** the PS controller **19** invokes the predefined power settings selected for the second power connector **22.**

One skilled in the art will recognize how the disclosure of the embodiment of FIGS. **3, 4A,** and **4B** could be extended to an embodiment having a connector module with more than two connectors. For example, to provide three different power connectors, a connector module with a generally triangular cross-section might be constructed with a different connector on each edge, and a device chassis may be provided with a generally triangular module bay for receiving the connector module in one of three different positions that expose one of the three power connectors and simultaneously conceals the other two power connectors.

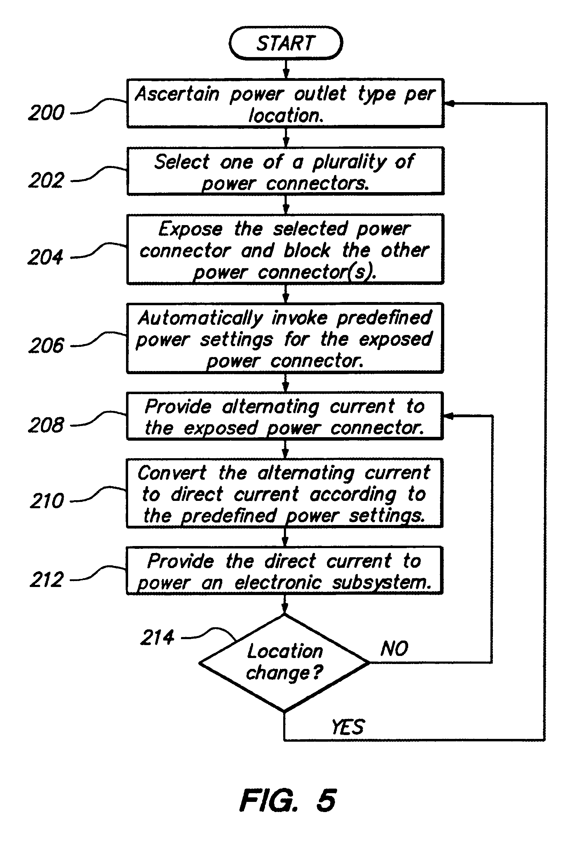

FIG. **5** is a flowchart outlining a method of powering an electronic device according to an embodiment of the invention. While the description of the flowchart summarizes the steps of the method, additional details regarding these steps may be informed by reference to the preceding discussion of system and figures.

To power the electronic device at a particular location, the AC power outlet type is ascertained for that location, according to step **200.** The AC power outlet type may specify the arrangement of prong receptacles at the power outlet, as well as the electrical specifications for the AC power outlet, such as the voltage, frequency, and current rating.

One of a plurality of power connectors is then selected according to step **202.** For example the plurality of power connectors may be provided on the power supply for the electronic device. The most appropriate power connector may be selected in consideration of the expected electrical loading on the device and the electrical specifications for the AC power outlet. For example, if the AC power outlet has a fifteen-ampere current rating, then a power connector having a fifteen-ampere current rating or higher may be selected over another power connector having a current rating of less than fifteen amperes. A key consideration is matching the current rating of the outlet to the connector. The practical selection will typically be driven by the outlet type requiring a particular line cord, and that cord will have a given connector that will uniquely physically mate to the device connector.

According to step **204,** the selected power connector is exposed while the remaining power connector(s) is/are at least partially blocked. For example, a movable chassis member or a removable connector module (discussed infra.) may be positioned by a user to expose the selected power connector.

According to step **206,** predefined power settings are automatically invoked for the exposed power connector. For example, a switch may detect the position of a moveable chassis member and trigger a power supply controller to invoke the predefined power settings in response.

Alternating current is provided to the exposed power connector in step **208.** Typically, providing alternating current to the exposed power connector will comprise using a location-specific power cord to connect the power supply to the AC power outlet. The power cord will typically have a connector (e.g. a line socket) at one end matched to the exposed power connector on the electronic device and having a power plug at the other end matched to the AC power outlet at that location.

In step **210,** the alternating current is converted to direct current according to the predefined power settings. In the process of converting the alternating current to direct current, the power supply adheres to the predefined power settings, such as drawing alternating current within a current limit specified by the predefined power settings.

The direct current is provided to an electronic subsystem in step **212.** For example, if the electronic device to be powered is a computer system, step **212** may include providing the direct current to a motherboard, a cooling fan, a hard drive, an optical drives, indicator lights such as LEDs, and so forth.

Conditional step **214** involves identifying a location change. For example, a change in location may result if the user brings or ships the electronic device from one country to another country having a different standard for AC power outlets. A change in location therefore prompts a determination of the power outlet type at the new location, as per step **200.** The type of power outlet at the new location prompts the selection of a power connector as per step **202,** because the type of AC power outlet available at the new location may affect the best choice of power connector. The outlined process continues as outlined, for the new location. The selected power connector is exposed (step **204**), the power settings for the exposed power connector are invoked (step **206**), alternating current is provided to the exposed power connector (step **208**), the alternating current is converted to direct current within the constraints of the predefined power settings for the exposed connector (step **210**), and the direct current is provided to the electronic subsystem (step **212**).

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, components and/or groups, but do not preclude the presence or addition of one or more other features, integers, steps, operations, elements, components, and/or groups thereof. The terms "preferably," "preferred," "prefer," "optionally," "may," and similar terms are used to indicate that an item, condition or step being referred to is an optional (not required) feature of the invention.

## Claims

1. A power supply for an electronic device (10), comprising:
a chassis (12);
a plurality of AC power connectors (21,22) supported on the chassis (12);
having at least an
an AC/DC converter with an AC input in electronic communication exposed power connector and a DC output for powering one or more electronic component;
a power supply controller (19) configured to automatically invoke predefined power settings for the exposed AC power connector; and
**characterised in that**: it further comprises:
a movable chassis member (24) supported on the chassis such that any position of the movable chassis member on the chassis exposes no more than one of the AC power connectors for connection to a power cord;
wherein the movable chassis member (24) comprises a connector module (60) on which the plurality of AC power connectors are carried (21,22), the chassis comprises a module bay (50) configured for releasably receiving the connector module in a plurality of distinct rotational positions, wherein in each rotationally distinct position an associated one of the exposed AC power connector (21,22) is exposed and connected to the AC input of the AC/DC converter.

2. The power supply of claim 1, further comprising:
a switch (18) having a distinct switch state associated with exposure of each AC power connector, each switch state triggering the power supply controller to invoke the predefined power settings for the exposed AC power connector.

3. The power supply of claim 2, wherein the switch automatically enables the exposed AC power connector (21,22) and disables the other AC power connectors.

4. The power supply of claim 1, wherein the movable chassis member comprises a cover secured to a track and constrained to move along the track to expose no more than one of the AC power connectors (21,22) at a time.

5. The power supply of claim 1, further comprising:
a plurality of keys provided on the connector module, each key distinctly associated with one of the AC power connectors (21,22), wherein each rotationally distinct position of the connector module positions the associated key in readable proximity to a switch configured for invoking the predefined power settings for the exposed AC power connector.

6. The power supply of claim 1, further comprising:
a first power cord (31) having a line socket at one end configured for mating with a first AC power connector and an AC power plug at the other end configured for mating with a first AC power outlet (41,42) ; and
a second power cord (32) having a line socket at one end configured for mating with a second AC power connector (21,22) and a plug (35) at the other end configured for mating with a second AC power outlet.

7. The power supply of claim 6, wherein the first and second AC power connectors (21,22) have different electrical current ratings, the line socket and AC power plug of the first power cord (31) have an electrical current rating matched to the current rating of the first AC power connector, and the line socket and AC power plug of the second power cord have an electrical current rating matched to the connector type of the second AC power connector.

8. The power supply of claim 1, wherein the power settings for a first AC power connector when exposed include a voltage in the range of between 220 and 240 volts and the power settings for a second AC power connector when exposed include a voltage in the range of between 100 and 120 volts.

9. The power supply of claim 8, wherein the power settings for the first AC power connector further include a current limit that is higher than a current limit of the second AC power connector.

10. A method, comprising:
selectively exposing no more than one of a plurality of AC power connectors on an electronic device while blocking the other AC power connectors (204);
automatically invoking predefined power settings for the exposed AC power connector in response to the exposure of the exposed AC power connector (205);
providing alternating current to the exposed AC power connector (208);
converting the alternating current to direct current according to the predefined power settings (210); and
providing the direct current to an electronic subsystem to be powered (212); and
wherein the step of selectively exposing one of a plurality of AC power connectors on an electronic device while blocking the other AC power connectors comprises positioning a connector module in a module bay in one of a plurality of rotationally distinct positions that exposes one of the AC power connectors.

11. The method of claim 10, wherein the step of providing alternating current to the exposed AC power connector comprises connecting one end of a power cord into the exposed AC power connector and connecting the other end of the power cord into an AC power outlet.

12. The method of claim 10, wherein the step of selectively exposing one of a plurality of AC power connectors on an electronic device while blocking the other AC power connectors comprises moving a cover to expose one of the AC power connectors and simultaneously at least partially cover each of the other AC power connectors.

13. The method of claim 12, wherein the step of moving the cover comprises moving the cover along a track.

14. An electronic device, comprising:
a power supply as claimed in claim 1; and
an electronic subsystem supported on the chassis and powered by the DC output.

15. The electronic device of claim 14, wherein the plurality of AC power connectors (21,22) comprise a first AC power connector (21)and a second AC power connector (22) having a higher current rating than the first AC power connector, and wherein the predefined power settings enforced by the power supply controller for the second AC power connector include a higher current limit than the predefined power settings enforced by the power supply controller for the first AC power connector.

## Patentansprüche

1. Stromversorgung für eine elektronische Einheit (10), wobei die Stromversorgung Folgendes umfasst:
ein Gehäuse (12);
eine Vielzahl von an dem Gehäuse (12) angebrachten Wechselstromnetz-Einbausteckern (21, 22);
einen Wechselstrom/Gleichstrom-Wandler mit einem elektronisch angeschlossenen Wechselstromeingang, der mindestens einen freigegebenen Einbaustecker und einen Gleichstromausgang zum Versorgen einer oder mehrerer Elektronikkomponenten mit Strom aufweist;
eine Stromversorgungs-Steuereinheit (19), die so gestaltet ist, dass sie vordefinierte Netzspannungswerte für den freigegebenen Wechselstromnetz-Einbaustecker automatisch aufrufen kann; und
**dadurch gekennzeichnet, dass** sie ferner Folgendes umfasst:
ein verschiebbares Gehäusebauteil (24), das so an dem Gehäuse angebracht ist, dass das verschiebbare Gehäusebauteil in jeder Stellung an dem Gehäuse nicht mehr als einen Wechselstromnetz-Einbaustecker zum Anschließen eines Netzkabels freigibt;
wobei das verschiebbare Gehäusebauteil (24) ein Steckermodul (60), auf dem die Vielzahl der Wechselstromnetzstecker (21, 22) angebracht sind, und das Gehäuse einen Modulschacht (50) zum Aufnehmen des austauschbaren Steckmoduls in einer Vielzahl definierte Drehstellungen umfasst, wobei in jeder definierten Drehstellung ein bestimmter Wechselstromnetz-Einbaustecker (21, 22) freigegeben und mit dem Netzeingang des Wechselstrom/Gleichstrom-Wandlers verbunden wird.

2. Stromversorgung nach Anspruch 1, die ferner Folgendes umfasst:
einen Schalter (18) mit einem definierten Schaltzustand, der der Freigabe jedes Wechselstromnetzsteckers zugehörig ist, wobei jeder Schaltzustand die Steuereinheit der Stromversorgung veranlasst, die vordefinierten Netzspannungswerte für den freigegebenen Wechselstromnetz-Einbaustecker zu aktivieren.

3. Stromversorgung nach Anspruch 2, wobei der Schalter automatisch den freigegebenen Wechselstromnetz-Einbaustecker (21, 22) aktiviert und die anderen Wechselstrombuchsen stilllegt.

4. Stromversorgung nach Anspruch 1, wobei das verschiebbare Gehäusebauteil eine Abdeckung umfasst, die durch eine Führungsschiene gehaltert wird und sich nur entlang der Führungsschiene verschieben lässt, damit zu jedem Zeitpunkt nicht mehr als einer der Wechselstromnetz-Einbaustecker (21, 22) freigegeben ist.

5. Stromversorgung nach Anspruch 1, die ferner Folgendes umfasst:
eine Vielzahl an dem Steckermodul angebrachter Markierungen, die jeweils definiert einem der Wechselstromnetz-Einbaustecker (21, 22) zugehörig sind,
wobei in jeder definierten Drehstellung des Steckmoduls die betreffende Markierung in sichtbare Nähe zu einem Schalter gebracht wird, damit dieser die vordefinierten Netzspannungswerte für den freigegebenen Wechselstromnetzstecker aktiviert.

6. Stromversorgung nach Anspruch 1, die ferner Folgendes umfasst:
ein erstes Netzkabel (31) mit einer Kabelkupplung an einem Ende zum Verbinden mit einem ersten Wechselstromnetz-Einbaustecker und mit einem Wechselstromnetzstecker am anderen Ende zum Verbinden mit einem ersten Netzspannungsausgang (41, 42); und
ein zweites Netzkabel (32) mit einer Kabelkupplung an einem Ende zum Verbinden mit einem zweiten Wechselstromnetz-Einbaustecker (21, 22) und mit einem Stecker (35) am anderen Ende zum Verbinden mit einem zweiten Netzspannungsausgang.

7. Stromversorgung nach Anspruch 7, wobei der erste und der zweite Wechselstromnetz-Einbaustecker (21, 22) für unterschiedliche Stromstärkenwerte geeignet sind, die Kabelkupplung und der Wechselstromnetz-Einbaustecker des ersten Netzkabels (31) einen zu dem Stromstärkenwert des ersten Wechselstromnetz-Einbausteckers passenden Stromstärkenwert aufweisen und die Kabelkupplung und der Wechselstromnetz-Einbaustecker des zweiten Netzkabels für einen zu dem Steckertyp des zweiten Wechselstromnetzsteckers passenden Stromstärkenwert geeignet sind.

8. Stromversorgung nach Anspruch 1, wobei die Netzspannungswerte für einen ersten freigegebenen Wechselstromnetz-Einbaustecker eine Spannung im Bereich zwischen 220 V und 240 V und die Netzspannungswerte für einen zweiten freigegebenen Wechselstromnetz-Einbaustecker eine Spannung im Bereich zwischen 100 V und 120 V beinhalten.

9. Stromversorgung nach Anspruch 8, wobei die Netzspannungswerte für den ersten Wechselstromnetz-Einbaustecker ferner eine Grenzstromstärke beinhalten, die höher als eine Grenzstromstärke des zweiten Wechselstromnetz-Einbausteckers ist.

10. Verfahren, das folgende Schritte umfasst:
selektives Freigeben von nicht mehr als einem aus einer Vielzahl von Wechselstromnetz-Einbausteckern in einer Elektronikeinheit und gleichzeitig Sperren der anderen Wechselstromnetzstecker (204);
automatisches Aktivieren vordefinierter Netzspannungseinstellungen für den freigegebenen Wechselstromnetzstecker als Reaktion auf die Freigabe des freigegebenen Wechselstromnetz-Einbausteckers (205);
Anlegen einer Wechselspannung an den freigegebenen Wechselstromnetz-Einbaustecker (208);
Umwandeln der Wechselspannung in eine Gleichspannung entsprechend den vordefinierten Netzspannungswerten (210); und
Anlegen der Gleichspannung an ein mit Strom zu versorgendes Elektronik-Untersystem (210); und
wobei der Schritt des selektiven Freigebens eines aus der Vielzahl von Wechselstromnetz-Einbausteckern in einer Elektronikeinheit und des gleichzeitigen Sperrens der anderen Wechselstromnetz-Einbaustecker das Einsetzen eines Steckermoduls in einen Modulschacht in einer aus einer Vielzahl von definierten Drehstellungen umfasst, in der einer der Wechselstromnetz-Einbaustecker freigegeben wird.

11. Verfahren nach Anspruch 10, wobei der Schritt des Zuführens von Wechselstrom zu dem freigegebenen Wechselstromnetz-Einbaustecker das Zusammenstecken eines Endes eines Netzkabels mit dem freigegebenen Wechselstromnetzstecker und das Zusammenstecken des anderen Endes des Netzkabels mit einem Netzspannungsanschluss umfasst.

12. Verfahren nach Anspruch 10, wobei der Schritt des selektiven Freigebens eines aus einer Vielzahl von Wechselstromnetz-Einbausteckern in einer Elektronikeinheit und des gleichzeitigen Sperrens der anderen Wechselstromnetz-Einbaustecker das Verschieben einer Abdeckung zum Freigeben eines der Wechselstromnetz-Einbaustecker und zum gleichzeitigen zumindest teilweisen Verdecken jedes der anderen Wechselstromnetz-Einbaustecker umfasst.

13. Verfahren nach Anspruch 12, wobei der Schritt des Verschiebens der Abdeckung das Verschieben der Abdeckung entlang einer Führungsschiene umfasst.

14. Elektronikeinheit, die Folgendes umfasst:
eine Stromversorgung nach Anspruch 1; und
ein an dem Gehäuse angebrachtes und durch den Gleichspannungsausgang mit Strom versorgtes Elektronik-Untersystem.

15. Elektronikeinheit nach Anspruch 14, wobei die Vielzahl von Wechselstromnetz-Einbausteckern (21, 22) einen ersten Wechselstromnetz-Einbaustecker (21) und einen zweiten Wechselstromnetz-Einbaustecker (22) mit einem höheren zulässigen Stromstärkewert als der erste Wechselstromnetz-Einbaustecker umfasst, und wobei die für den zweiten Wechselstromnetz-Einbaustecker durch die Steuereinheit der Stromversorgung aktivierten vordefinierten Netzspannungswerte eine höhere Grenzstromstärke beinhalten als die für den ersten Wechselstromnetz-Einbaustecker durch die Steuereinheit der Stromversorgung aktivierten vordefinierten Netzspannungswerte.

## Revendications

1. Alimentation électrique pour une unité électronique (10), l'alimentation électrique comprenant :
un châssis (12) ;
une pluralité de connecteurs électriques AC (21, 22) supportés sur le châssis (12) ;
un convertisseur AC/DC avec une entrée AC en communication électronique ayant au moins un connecteur électrique exposé et une sortie DC pour alimenter un ou plusieurs composants électroniques ;
un contrôleur d'alimentation électrique (19) configuré pour invoquer automatiquement des ajustages électriques prédéfinis pour le connecteur électrique AC exposé ; et
**caractérisé en ce qu'**elle comprend en outre
un élément de châssis déplaçable (24) supporté sur le châssis de telle sorte qu'à n'importe quelle position de l'élément de châssis déplaçable sur le châssis n'expose pas plus d'un des connecteurs électriques AC en vue d'une connexion à un câble d'alimentation ;
dans laquelle l'élément de châssis déplaçable (24) comprend un module de connecteur (60) sur lequel la pluralité de connecteurs électriques AC sont portés (21, 22), le châssis comprend une baie pour module (50) configurée afin de recevoir de manière réversible le module de connecteur dans une pluralité de positions rotativement distinctes, dans laquelle dans chaque position rotativement distincte un connecteur associé du connecteur électrique AC exposé (21,22) est exposé et connecté à l'entrée AC du convertisseur AC/DC.

2. Alimentation électrique selon la revendication 1, comprenant en outre :
un interrupteur (18) ayant un état de commutation distinct associé à l'exposition de chaque connecteur électrique AC, chaque état de commutation déclenchant le contrôleur d'alimentation électrique pour invoquer les ajustages électriques prédéfinis pour le connecteur électrique AC exposé.

3. Alimentation électrique selon la revendication 2, dans laquelle l'interrupteur active automatiquement le connecteur électrique AC exposé (21, 22) et désactive les autres connecteurs électriques AC.

4. Alimentation électrique selon la revendication 1, dans laquelle l'élément de châssis déplaçable comprend un couvercle fixé à une glissière et contraint à se déplacer le long de la piste pour exposer pas plus d'un des connecteurs électriques AC (21, 22) à la fois.

5. Alimentation électrique selon la revendication 1, comprenant en outre :
une pluralité de touches prévues sur le module de connecteur, chaque touche étant associée distinctivement à un des connecteurs électriques AC (21, 22), dans laquelle chaque position rotativement distincte du module de connecteur positionne la touche associée à proximité lisible d'un interrupteur configuré afin d'invoquer les ajustages électriques prédéfinis pour le connecteur électrique AC exposé.

6. Alimentation électrique selon la revendication 1, comprenant en outre :
un premier câble d'alimentation (31) ayant une prise de ligne à une extrémité et configuré afin de s'associer à un premier connecteur électrique AC et une prise électrique mâle AC à l'autre extrémité et configuré afin de s'associer à une première sortie électrique AC (41, 42) ; et
un second câble d'alimentation (32) ayant une prise de ligne à une extrémité et configuré afin de s'associer à un second connecteur électrique AC (21, 22) et une prise mâle (35) à l'autre extrémité configurée afin de s'associer à une seconde sortie électrique AC.

7. Alimentation électrique selon la revendication 6, dans laquelle le premier et le second connecteur électrique AC (21,22) ont des données limites de courant électrique différentes, la prise de ligne et la prise électrique mâle AC du premier câble d'alimentation (31) ont des données limites de courant électrique concordant avec les données limites de courant du premier connecteur électrique AC, et la prise de ligne et la prise électrique mâle AC du second câble d'alimentation ont des données limites de courant électrique concordant avec le type de connecteur du second connecteur électrique AC.

8. Alimentation électrique selon la revendication 1, dans laquelle les ajustages électriques pour un premier connecteur électrique AC quand il est exposé incluent une tension dans la plage comprise entre 220 et 240 volts et les ajustages électriques pour un second connecteur électrique AC quand il est exposé incluent une tension dans la plage comprise entre 100 et 120 volts.

9. Alimentation électrique selon la revendication 8, dans laquelle les ajustages électriques pour le premier connecteur électrique AC incluent en outre une limite de courant qui est supérieure à une limite de courant du second connecteur électrique AC.

10. Procédé, comprenant de :
exposer sélectivement pas plus d'un d'une pluralité de connecteurs électriques AC sur une unité électronique tout en bloquant les autres connecteurs électriques AC (204) ;
invoquer automatiquement des ajustages électriques prédéfinis pour le connecteur électrique AC exposé en réponse à l'exposition du connecteur électrique AC exposé (205) ;
fournir un courant alternatif au connecteur électrique AC exposé (208) ;
convertir le courant alternatif en courant continu selon les ajustages électriques prédéfinis (210) ; et
fournir le courant continu à un sous-système électronique à être alimenté (212) ; et
dans laquelle l'étape d'exposition sélective d'un d'une pluralité de connecteurs électriques AC sur une unité électronique tout en bloquant les autres connecteurs électriques AC comprend de positionner un module de connecteur dans une baie pour module dans une d'une pluralité de positions rotativement distinctes qui expose un des connecteurs électriques AC.

11. Procédé selon la revendication 10, dans lequel l'étape de fourniture d'un courant alternatif au connecteur électrique AC exposé comprend de connecter une extrémité d'un câble d'alimentation dans le connecteur électrique AC exposé et connecter l'autre extrémité du câble d'alimentation dans une sortie électrique AC.

12. Procédé selon la revendication 10, dans lequel l'étape d'exposition sélective d'un d'une pluralité de connecteurs électriques AC sur une unité électronique tout en bloquant les autres connecteurs électriques AC comprend de déplacer un couvercle pour exposer un des connecteurs électriques AC et simultanément couvrir au moins partiellement chacun des autres connecteurs électriques AC.

13. Procédé selon la revendication 12, dans lequel l'étape de déplacement du couvercle comprend de déplacer le couvercle le long d'une piste.

14. Unité électronique, comprenant :
une alimentation électrique selon la revendication 1 ;
et un sous-système électronique supporté sur le châssis et alimenté par la sortie DC.

15. Unité électronique selon la revendication 14, dans laquelle la pluralité de connecteurs électriques AC (21,22) comprend un premier connecteur électrique AC (21) et un second connecteur électrique AC (22) ayant des données limites de courant plus élevées que le premier connecteur électrique AC, et dans laquelle les ajustages électriques prédéfinis appliqués par le contrôleur d'alimentation électrique pour le second connecteur électrique AC incluent une limite de courant plus élevée que les ajustages électriques prédéfinis appliqués par le contrôleur d'alimentation électrique pour le premier connecteur électrique AC.
